# EUROPEAN PATENT APPLICATION

(11) **EP 4 670 564 A1**
(43) Date of publication of application: **31.12.2025**
(21) Application number: 24184381.2
(22) Date of filing: 25.06.2024
(51) Int. Cl.: A45C 5/14, A45C 7/00, A45C 13/38

(54) **ATTACHMENT UNIT AND CARRYING SYSTEM**

(71) Applicant: Blink Sourcing Team Ltd., Wan Chai (HK)
(72) Inventor: GAGGIO, Alessandro, 11120 Nonthaburi (TH)
(74) Representative: Luppi Intellectual Property S.r.l.

(57) **Abstract**

An attachment unit (100) configured to connect a piece of luggage (1000) to a carrying trolley (1) arranged for carrying the piece of luggage (1000) and a carrying system (10000) comprising this attachment unit (100) are disclosed wherein the attachment unit (100) comprises a body (101) provided with:
- a main part (102) configured to encompass a portion (11, 26) of the carrying trolley (1) so as to reversibly connect the attachment unit (100) to the carrying trolley (1); and
- attachment means (103) fitted to the main part (102) and configured to engage connecting means (1002) of the piece of luggage (1000) so as to reversibly connect the attachment unit (100) to the piece of luggage (1000).

When the main part (102) encompasses the portion (11, 26) of the carrying trolley (1) and the attachment means (103) engages the connecting means (1002) of the piece of luggage (1000), the attachment unit (100) is in a coupled configuration (E) in which the attachment unit (100) is attached both to the piece of luggage (1000) and to the carrying trolley (1).

## Description

### Technical field

The invention relates to an attachment unit configured to connect a piece of luggage to a carrying trolley arranged for carrying the piece of luggage, in particular a backpack.

In other words, the piece of luggage is connected to the carrying trolley by the attachment unit according to the invention.

Specifically but not exclusively, the carrying trolley is a carrying trolley that can be pulled by hand that can be used to easily carry the piece of luggage, in particular a backpack like a backpack for school, on uneven terrain or on stairs, and the attachment unit is suitable for connecting the piece of luggage to the carrying trolley and is distinct from the piece of luggage and from the carrying trolley.

The invention further relates to a carrying system that comprises the attachment unit according to the invention.

### Background of the invention

Carrying trolleys pulled by hand for carrying a piece of luggage are known from the prior art that are arranged for carrying items contained in the piece of luggage, along a path on a sliding surface from a point of departure to a point of arrival. Such carrying trolleys avoid a user having to support and carry the piece of luggage by hand or having to load the piece of luggage onto his or her shoulders. When the piece of luggage is very heavy carrying by hand or on the shoulders can be in fact very demanding for the user and can result in strain that may damage the back and/or the joints of the user.

Carrying trolleys of known type include a base that is suitable for having the piece of luggage positioned thereupon.

The piece of luggage can be, in particular, a backpack, in particular a backpack for school. In this case, the trolley is also defined as a backpack trolley. For example, the items can comprise books or complementary, teaching, sporting or similar materials. Also, for example, the point of departure can be the home of a schoolchild and the point of arrival can be the inside of a school where the schoolchild has lessons. Backpacks for school are provided with a cover comprising a bottom to be positioned in use on base of the carrying trolley, and with a backrest suitable for being rested in use, in contact with a back of a user.

Carrying trolleys of known type each further comprise two telescopically extendible uprights fixed to the base and provided at an upper end thereof with a handle that connects the uprights, the handle being intended to be gripped by a user when in use the user has to drag the carrying trolley.

The uprights that are thus made are also defined as a double T or upturned U and extend along a direction that is substantially orthogonal to the direction of extent of the base.

In order to facilitate travel on the carrying surface, prior-art carrying trolleys for carrying a piece of luggage comprise a plurality of freely rotating wheels that, in use, are intended to roll on the carrying surface by rotating around a respective axis of rotation.

The backpack is fixed to the carrying trolley by a strip of fabric, or flap, which is fitted to an outer face of the backrest of the backpack and which is provided with a through opening which is suitable for inserting a portion of frame of the carrying trolley. In this manner the backpack and the carrying trolley are reciprocally coupled.

The backpack is further fixed to the carrying trolley by using a plurality of snap buttons each of which has a male element fitted to a side edge of the frame of the carrying trolley and a female element fitted to a side edge of the body of the backpack at a height corresponding to that of a respective male element such that the male element can couple with a seat provided in the respective female element.

One drawback in the manner in which the backpack is attached to the carrying trolley of known type is that the strip of fabric is added to the backrest of the backpack and, thus, modifies the traditional structure of the backrest, making carrying the backpack on the shoulders of the user uncomfortable. In fact, the strip of fabric does not extend over the entire extent of the outer face of the backrest, but only over a portion thereof. This means that the perimeter parts of the strip of fabric are raised with respect to the surface of the outer face of the backrest, i.e. protrude from the surface of the outer face of the backrest to the exterior and, in use, come to abut on the back of the user, creating discomfort to the user and thus making carrying the backpack on the shoulders of the user uncomfortable.

School backpacks are generally also provided with two shoulder straps that, when the backpack is fitted to the carrying trolley, are passed through an opening obtained in the frame of the carrying trolley between the two uprights in order to enable the backpack to be carried on the shoulders of a user even once the backpack is attached to the carrying trolley.

Another drawback in the manner in which the backpack is attached to the carrying trolley of known type is that in order to be able to pass the shoulder straps into the opening obtained between the two uprights, the shoulder straps have to have a reduced width, this making carrying the backpack attached to the carrying trolley on the shoulders of the user inconvenient and unergonomic.

A further drawback in the manner in which the backpack is attached to the carrying trolley of known type that is described above is that the male and female elements of the snap buttons are not adjustable.

One object of the invention is to obtain a manner of attaching a piece of luggage, in particular a backpack, to a carrying trolley that is an alternative to known manners.

Another object of the invention is to obtain a manner of attaching a piece of luggage, in particular a backpack, to a carrying trolley that is able to overcome the limits or disadvantages of the prior art.

A further object of the invention is to provide a manner of attaching a piece of luggage, in particular a backpack, to a carrying trolley that is practical and ergonomic for the user.

Still another object of the invention is to provide a manner of attaching a piece of luggage, in particular a backpack, to a carrying trolley that does not entail substantial modifications to the structure of pre-existing piece of luggage, in particular to the backrest and shoulder straps of the piece of luggage, and enables new structurally simplified the piece of luggage to be made.

These objects are achieved by the attachment unit for attaching a piece of luggage to the carrying trolley according to one or more of the claims set out below and by a carrying system that comprises the attachment unit according to the invention.

Owing to the invention it is thus possible to obtain an attachment unit that is distinct from the piece of luggage and from the carrying trolley.

One advantage of the attachment unit according to the invention is that it enables the piece of luggage to be attached to the carrying trolley without modifying either the backrest of the piece of luggage or the shoulder straps of the piece of luggage.

Another advantage of the attachment unit according to the invention is to make it easy and ergonomic to carry a piece of luggage, once it is attached to the carrying trolley, on the shoulders of a user by at least one shoulder strap element thereof.

### Short description of the drawings

The invention can be better understood and implemented with reference to the attached drawings that illustrate an embodiment thereof by way of non-limiting example in which:
Figure 1 is a perspective view of an attachment unit according to the invention configured to connect a piece of luggage to a carrying trolley arranged for carrying the piece of luggage;
Figure 2 is a perspective side view of a carrying trolley that is connectable to the attachment unit of Figure 1;
Figure 3 is a side view of a piece of luggage, in particular a backpack, which is attachable to the attachment unit of Figure 1 in order to connect the backpack luggage to the carrying trolley;
Figure 4 is a frontal view of the attachment unit of Figure 1 with some components in an extended configuration;
Figure 5 is a frontal view of the attachment unit of Figure 1 with some components in a folded configuration and which are shown partially or in an interrupted manner;
Figure 6 is a side view of the attachment unit of Figure 5 and shown partially or in an interrupted manner;
Figure 7 is a rear view of the attachment unit of Figure 1 with some components in a folded configuration and which are shown partially or in an interrupted manner;
Figure 7a shows an enlarged detail of Figure 8;
Figure 8 is a top view of the attachment unit with some components in a folded configuration;
Figure 9 is a rear view of the attachment unit of Figure 1 with some components in an extended configuration;
Figure 10 is a side view from a first side of a carrying system according to the invention comprising the attachment unit according to the invention;
Figure 11 is a front view of the carrying system of Figure 10;
Figure 12 is a top view of the carrying system of Figure 10;
Figure 13 is a side view from a second side of the carrying system of Figure 10;
Figure 14 is a rear view of the carrying system of Figure 10 in which telescopic rod means of the carrying trolley is in an extended end-of-stroke configuration;
Figure 15 is a rear view of the carrying system of Figure 10 in which telescopic rod means of the carrying trolley is in a retracted end-of-stroke configuration;
Figure 16 is a rear view of the carrying trolley of Figure 2;
Figure 17 is a frontal view of the carrying trolley of Figure 2;
Figure 18 is a side view from one side of the carrying trolley of Figure 2;
Figure 19 is a side view from the other side of the carrying trolley of Figure 2;
Figure 20 is a top view of the carrying trolley of Figure 2;
Figure 21 is a bottom view of the carrying trolley of Figure 2;
Figure 22 is a side perspective view of the carrying trolley of Figure 2 in an operating configuration in which the telescopic rod means is in an extended end-of-stroke configuration;
Figure 23 is a side view of the carrying trolley of Figure 22;
Figure 24 is a front view of the carrying trolley of Figure 22.

### Detailed description

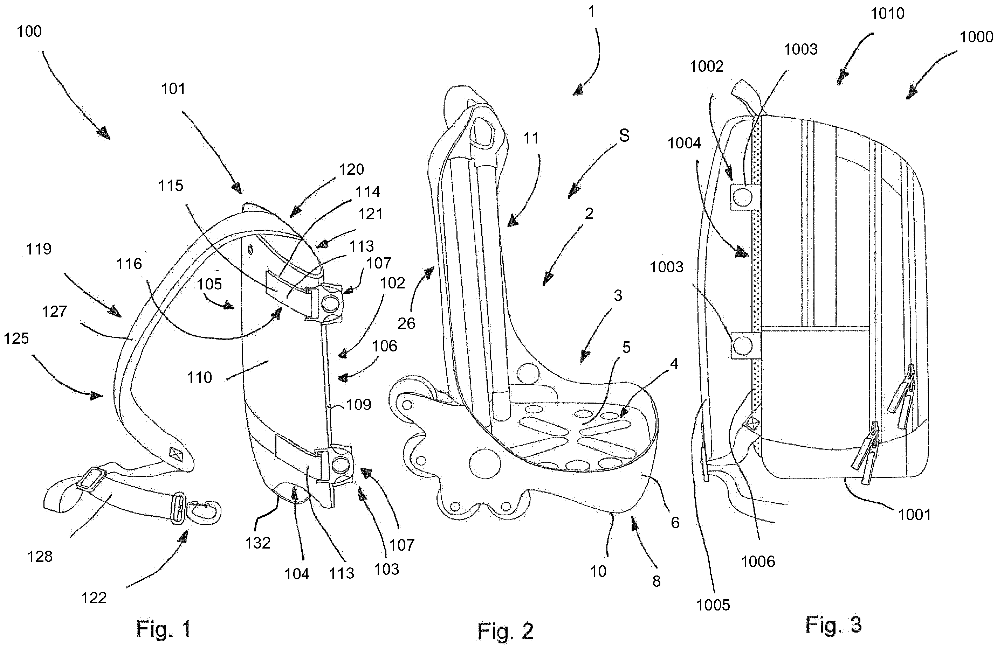

With reference to Figures 1 and 4 to 15, with numeric reference 100 an attachment unit is indicated that is configured to connect a piece of luggage 1000 (an embodiment of which is shown in Figure 3) to a carrying trolley 1 (an embodiment of which is shown in Figure 2).

The attachment unit 100 is distinct from the piece of luggage 1000 and from the carrying trolley 1.

The attachment unit 100 is an intermediate component to which both the piece of luggage 1000 and the carrying trolley 1 are connected reciprocally.

The carrying trolley 1 is arranged for carrying the piece of luggage 1000 easily along a path on a sliding surface, or carrying surface, from a point of departure to a point of arrival. This path can comprise uneven terrain or stairs.

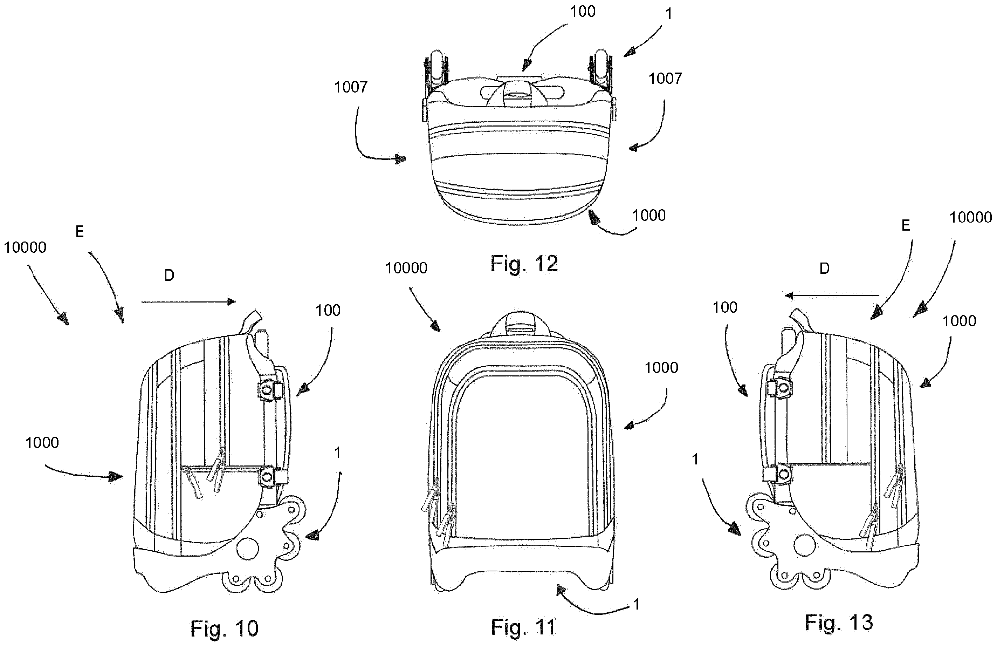

The path can have a sliding direction D, indicated, for example, in Figure 10.

The carrying trolley 1, in particular, can be pulled by hand by a user, like, for example, a student. Nevertheless, in an embodiment that is not illustrated, the carrying trolley 1 is also transportable in a motorized manner by the user.

The carrying trolley 1 comprises a frame 2 arranged for supporting the piece of luggage 1000 during movement thereof by means of the carrying trolley 1.

The frame 2 can have a general L shape.

The frame 2 can be made of plastics, in particular plastics that are stiff at ambient temperature, possibly reinforced with carbon fibres or another similar material.

The frame 2 can be made as a monobloc.

The piece of luggage 1000 comprises a casing 1010 provided with a base 1001 positionable, in use, on the carrying trolley 1, and a backrest 1004 suitable for being rested in use in contact with a back of the user.

The piece of luggage 1000 further comprises a pair of shoulder straps 1005 each of which comprises two ends fixed to an outer face 1006 of the backrest 1004 and projecting from the latter outwards. The shoulder straps 1005 are of known type and are configured to carry the piece of luggage 1000 on the shoulders of the user.

The frame 2 is provided with a lower support part 3, or base part, configured to receive and support the base 1001, or a bottom wall, of the piece of luggage 1000.

The lower support part 3 defines the base element of the L shape of the frame 2.

The lower support part 3 can comprise a bottom wall 4 provided with a bottom face 5 arranged for restingly receiving and contacting the base 1001 of the piece of luggage 1000.

The piece of luggage 1000 is, in particular, but not exclusively, a backpack, for example a school backpack or a bag.

The piece of luggage 1000 is suitable for containing different types of items comprising, for example, school material like books and/or exercise books.

The attachment unit 100 comprises a body 101 provided with a main part 102 configured to encompass a portion of the carrying trolley 1 so as to reversibly connect the attachment unit 100 to the carrying trolley 1.

The attachment unit 100 is a sort of harness for the carrying trolley 1.

The body 101 further comprises attachment means 103 fitted to the main part 102 and configured to engage, in particular by pressure or snapping, with connecting means 1002 of the piece of luggage 1000 so as to reversibly connect the attachment unit 100 to the piece of luggage 1000.

The main part 102 can have a circular or oval plan shape and can be provided with a through opening 104 configured to be traversed by said portion of carrying trolley 1 so that the main part 102 encompasses this portion.

In particular, the main part 102 can be configured to be inserted slidingly into the portion of carrying trolley 1.

The main part 102 can be made as a single piece.

Alternatively, the main part 102 can comprise at least one first piece 105 and at least one second piece 106 that are reciprocally connectable, or connected in a permanent or fixed manner, to form the through opening 104.

For example, the at least one first piece 105 and the at least one second piece 106 are connected permanently by stitching, in particular made at opposite sides thereof, as in the embodiment illustrated in the Figures.

The first piece 105 and the second piece 106 can be opposite when they are reciprocally connected.

The main part 102 can comprise a first side edge 108 and a second side edge 109 which can coincide with the opposite side edges of the first piece 105 and of the second piece 106.

The second side edge 109 of the main part 102 is opposite the first side edge 108 of the main part 102, i.e. they are arranged on opposite sides of the main part 102.

When the main part 102 encompasses the portion of the carrying trolley 1 and the attachment means 103 engages the connecting means 1002 of the piece of luggage 1000, the attachment unit 100 is in a coupled, or engaged, configuration E, (shown for example in Figure 10) in which the attachment unit 100 is attached both to the piece of luggage 1000 and to the carrying trolley 1 so that the piece of luggage 1000 can be carried by the carrying trolley 1.

The attachment means 103 of the attachment unit 100 can comprise a plurality of attachment elements 107 and the connecting means 1002 of the piece of luggage 1000 can comprise a plurality of connecting elements, each attachment element 107 being connectable releasably to a respective connecting element.

The attachment elements 107 of the attachment means 103 define with the respective connecting elements of the connecting means 1002 a connecting system for connecting the piece of luggage 1000 to the attachment unit 100.

For example, the attachment means 103 is snap-couplable with the connecting means 1002 to couple the attachment unit 100 with the piece of luggage 1000 releasably, in particular when the base 1001 of the piece of luggage 1000 is restingly arranged on the bottom face 5 of the carrying trolley 1.

Each attachment element 107 can be of the male or female type and is suitable for coupling with a respective male or female connecting element 1003 provided in the piece of luggage 1000.

Each attachment element 107 of female type comprises a receiving seat 137 for the respective connecting element 1003 of male type and each connecting element 1003 of female type comprises a receiving seat for the respective attachment element 107 of male type.

The attachment means 103 of the attachment unit 100 can comprise, in particular, a plurality of female attachment elements and/or a plurality of male attachment elements connected to the main part 102, at least one first female attachment element 107a or at least one first male attachment element being arranged near the first side edge 108 of the main part 102 and at least one second female attachment element 107b or at least one second male attachment element being arranged near the second side edge 109 of the main part 102.

In other words, on each of the side edges 108, 109 there is at least one male attachment element or at least one female attachment element.

The at least one first female attachment element 107a or the at least one first male attachment element and the at least one second female attachment element 107b or the at least one second male attachment element are arranged for each coupling, releasably, with a respective complementary male connecting element 1003 or female connecting element of the connecting means 1002 fitted to the piece of luggage 1000 to connect reciprocally the attachment unit 100 and the luggage 1000 releasably.

In the embodiment shown in the Figures, the attachment unit 100 comprises two first, in particular female, attachment elements 107a, fitted to the first side edge 108 and two second, in particular female, attachment elements 107b, fitted to the second side edge 109. The number of first attachment elements and of second attachment elements fitted to the side edges 108 and 109 can differ and several types of attachment element (male and female) can be provided on each side edge 108 and 109.

The at least one first female attachment element 107a or the at least one first male attachment element and the at least one second female attachment element 107b or the at least one second male attachment element each define with the respective corresponding/complementary male connecting element 1003 or female connecting element of the luggage 1000 a snap or pressure quick attachment/-release element, such as a snap buckle or a snap or pressure button, configured to attach together the piece of luggage 1000 and the attachment unit 100.

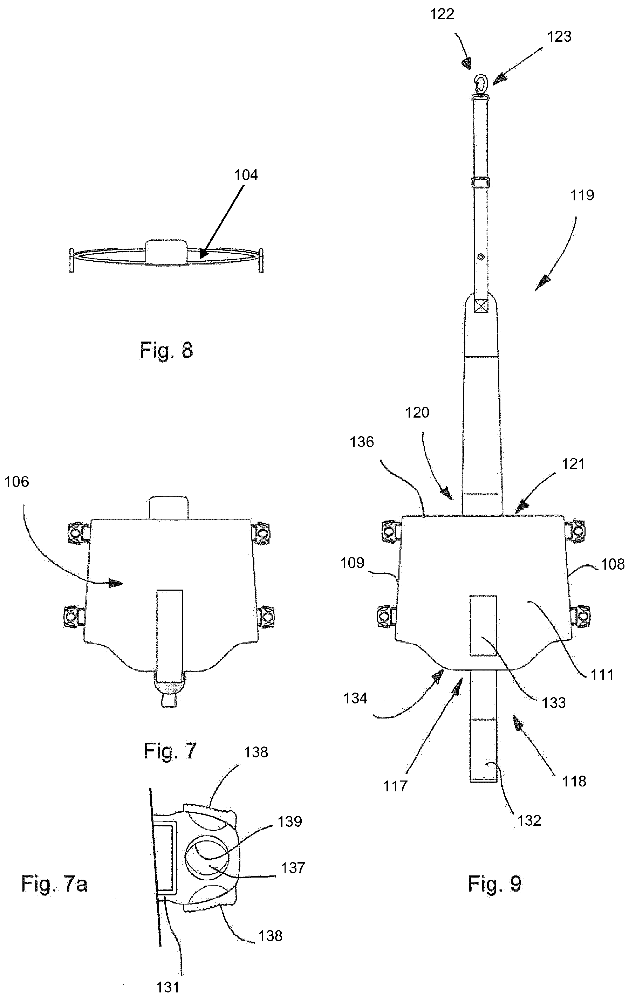

With each female element (first female attachment element 107a, second female attachment element 107b, or female connecting element of the piece of luggage 1000, when present) at least one, in particular elastic, attachment/release button 138 can be associated that is configured to retain each male element (first male attachment element of the attachment unit 100, second male attachment element of the attachment unit 100, or male connecting element of the piece of luggage 1000, when present) in the respective receiving seat in the engagement configuration E. For example, the at least one attachment/release button 138 comprises an abutting element 139 (Figure 7a) arranged for exerting a force on a respective male element when a male element is arranged in the receiving seat.

An elastic element like a spring can be operationally associated with each attachment/release button 138.

Once pressed, the attachment/release button 138 is further configured to disengage each male element (first male attachment element of the attachment unit 100, second male attachment element of the attachment unit 100, or male connecting element of the luggage 1000, when present) from the respective receiving seat.

In the embodiment shown in the Figures, each first female attachment element 107a and each second female attachment element 107b comprises a pair of elastic attachment/release buttons 138 that are pressed in use, for example manually, in opposite directions to free the male element previously received there. The force impressed on the elastic attachment/release buttons 138 is directed in a direction opposite that exerted by the elastic elements.

In the coupled configuration E the attachment means 103 is coupled with the connecting means 1002. In this configuration, the abutting elements 139 of the elastic attachment/release buttons 138 exert a force on the male element arranged in the receiving seat, this force acting substantially in at least two opposite directions. This force is, in particular, an elastic force, when an elastic element like a spring is associated with each attachment/release button 138.

The connecting elements 1003 are fitted to the piece of luggage 1000 in particular on the two opposite sides 1007 of the casing 1010 and protrude beyond the outer face 1006 of the backrest 1004.

The main part 102 of the attachment unit 100 can comprise a front zone 110 facing outwards in the coupled configuration E and a rear zone 111 opposite the front zone 110 and facing the piece of luggage 1000 in the coupled configuration E.

The front zone 110 is obtained, in particular, on the first piece 105, whereas the rear zone 111 is obtained, in particular, on the second piece 106.

The zone 110 is defined as front considering a regular use of the carrying trolley 1 (with which the attachment unit 100 is connectable in use) when the carrying trolley 1 is dragged along the sliding direction D, in which the user takes up position near the front zone 110. Similarly, the zone 111 is defined as rear considering a regular use of the carrying trolley 1 (with which the attachment unit 100 is connectable in use) when the carrying trolley 1 is dragged along the sliding direction D, in which the user takes up position near the front zone 110. In other words, the zone 110 and the zone 111 are defined respectively as front and back with respect to the sliding direction D. The front zone 110 is nearer the user in the regular use of the carrying trolley 1 (to which the attachment unit 100 is connected) with respect to the rear zone 111.

The plurality of female attachment elements and/or the plurality of male attachment elements are, in particular, connected to the front zone 110 and protrude to the rear zone 111 to couple with the connecting means 1002 of the piece of luggage 1000.

The main part 102 of the attachment unit 100 can further comprise distance adjusting means 112 slidingly associated with the attachment means 103 to set a distance of the attachment means 103 from the main part 102, in particular from the first side edge 108 and from the second side edge 109.

The distance adjusting means 112 makes the attachment means 103 adjustable.

The distance adjusting means 112 can comprise a plurality of distance adjusting belts 113, each distance adjusting belt 113 being provided with a belt portion 114 for example fitted in a permanent or fixed manner to the main part 102, in particular to the front zone 110, for example by one or more stitches.

Each distance adjusting belt 113 can be further provided with a further belt portion 115 intended to engage slidingly and releasably a respective female attachment element or male attachment element of the plurality of attachment elements 107. In particular, each attachment element 107 can comprise a ring element 131 which the further belt portion 115 is intended to engage in a slidable and releasable manner. In particular, a ring element 131 can be associated with each female attachment element.

Each distance adjusting belt 113 can be further provided with a releasable connecting device 116 arranged for connecting in a stable manner the belt portion 114 and the further belt portion 115 and thus taking the attachment means 103 to a desired distance from the main part 102.

In particular, the further belt portion 115 is movable, in particular by a user, between a non-operational or uncoupled position, not shown in the Figures, in which it is not connected to the belt portion 114, and an operational or uncoupled position, for example, shown in Figures 1, 4, 5, 14 and 15, in which the further belt portion 115 is connected to the belt portion 114 by the releasable connecting device 116.

Each distance adjusting belt 113 can be made in the form of a strip of fabric.

The attachment unit 100 can further comprise retaining adjusting means 117 configured to adjust the retaining of the main part 102 on the carrying trolley 1.

The retaining adjusting means 117 can comprise a releasable joining device 118 configured to engage slidably and releasably the frame 2 of the carrying trolley 1, in particular at an passage opening 36 thereof that is interposed, when the main part 102 encompasses the portion of the carrying trolley 1, between the front zone 110 and the rear zone 111 and thus connect said front zone 110 and the rear zone 111. The releasable joining device 118 thus contributes to stably fixing the main part 102 of the attachment unit 100 to the carrying trolley 1, in particular the first piece 105 to the second piece 106 when present.

The releasable joining device 118 can comprise a first element 132 and a second element 133 arranged for coupling with one another. For example, the first element 132 and/or the second element 133 can take the form of strips of fabric.

The main part 102 comprises an upper zone 121 and a lower zone 134, opposite the upper zone 121, said zone 121 and zone 134 being defined respectively as upper and lower on the basis of the position adopted in the engagement configuration E.

The first element 132 is connected, in particular, to the upper zone 121 of the main part 102, whereas the second element 133 is fitted to a portion of the rear zone 111. Still more in particular, the first element 132 is connected to a lower edge 135 of the front zone 100.

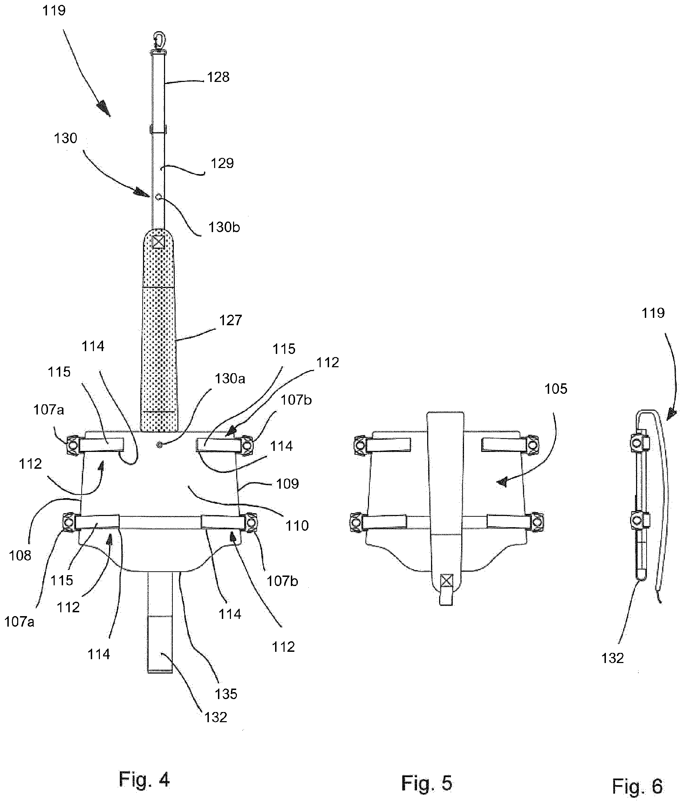

The first element 132 is movable, in particular by a user, between a non-operating position, for example shown in Figures 4 and 9, in which it does not couple with the second element 133, and an operating position, for example, shown in Figures 5 and 8, in which it is coupled with the second element 133 by the releasable joining device 118. The second element 133 is, in particular, fitted to the rear zone 111 in a fixed manner, for example by one or more stitches.

The releasable connecting device 116 and the releasable joining device 118 each comprises either a snap attachment element or a hook-and-loop fastening system or a magnetic closing system.

This hook-and-loop fastening system is of known type, for example of Velcro^{®} type. In particular, the hook-and-loop fastening system can be provided with a strip provided with loops and with a strip provided with hooks, at least one portion of which engage reciprocally when they are brought together by reciprocal fixing. The reciprocal engagement position of the strip provided with loops and of the strip provided with hooks is variable and chosen on the basis of the desired distance and establishes the desired distance of the attachment means 103 from the main part 102.

In the releasable connecting device 116, the strip provided with loops and the strip provided with hooks can be applied, for example stitched, onto the same side of the adjusting belt 113 and engage reciprocally to fix the desired distance between the attachment means 103 and the main part 102. For example, the strip provided with loops can be applied to a side of the further belt portion 115, in particular the side facing the main part 102 in use, and the strip provided with hooks can be applied to a side of the belt portion 114, in particular the side not facing the main part 102 in use, or vice versa.

In the releasable joining device 118, the strip provided with loops can be applied, for example stitched, onto the second element 133, in particular onto a face facing the outside of the latter, and the strip provided with hooks can be applied to a portion of the first element 132, or vice versa. The strip provided with loops and the strip provided with hooks of the latter engage reciprocally to firmly fix the front zone 110 and the rear zone 111, or the first piece 105 to the second piece 106.

The body 101 of the attachment unit 100 can further comprise at least one shoulder strap element 119 for carrying on at least one shoulder of a user.

The at least one shoulder strap element 119 is provided with a first end portion 120 connectable, or connected permanently or in a fixed manner, for example by one or more of the stitches, to the upper zone 121 of the main part 102, in particular to an upper edge 136 of the rear zone 111.

The at least one shoulder strap element 119 is further provided with a second end portion 122, opposite the first end portion 120, connectable, or connected permanently or in a fixed manner, to a lower support part 3 of the carrying trolley 1.

The first end portion 120 and/or the second end portion 122 are provided with a connecting element 123 configured to connect releasably the at least one shoulder strap element 119 to the main part 102 and/or to the carrying trolley 1.

The at least one connecting element 123 is couplable, in particular by snap coupling, to a respective connecting member 37 provided in the carrying trolley 1 to fix the first end portion 120 and/or the second end portion 122 of the at least one shoulder strap element 119 to the main part 102 of the body 101 or to the lower support part 3 of the carrying trolley 1.

For example, as in the embodiment shown in the Figures, the second end portion 122 can be provided with a connecting element 123, such as a carabiner, which is configured to attach to a connecting member 37 provided in the frame 2, for example at a lightening opening 35 of the frame 2. The connecting member 37 can be, for example, a bar.

The at least one shoulder strap element 119 can comprise a foldable part 125, i.e. a part that can be easily folded.

The main part 102 and the at least one shoulder strap element 119 (except for the connecting element 123) can be made of a fabric material, for example a material comprising polyester and/or nylon and/or cotton.

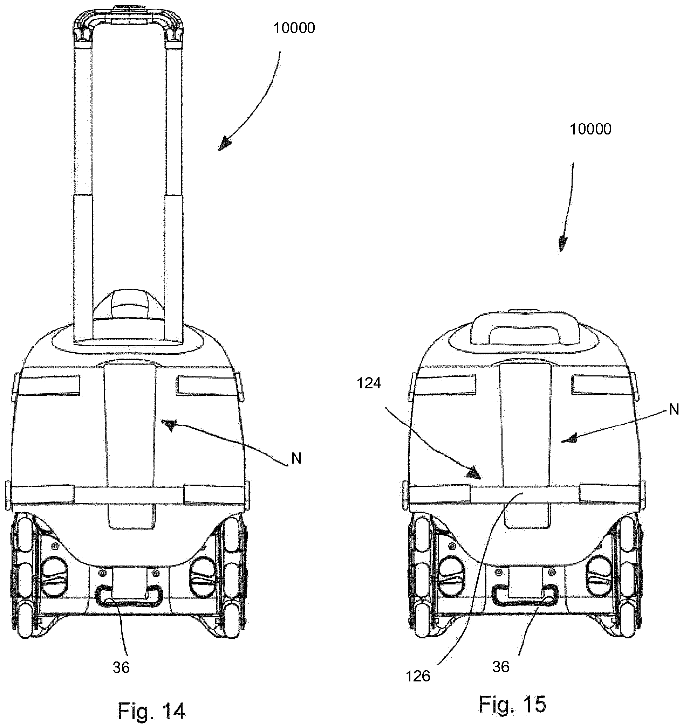

The main part 102 can further comprise a housing element 124 arranged for housing at least one portion of the foldable part 125 of the at least one shoulder strap element 119 in a non-operational or folded configuration N (Figures 14 and 15) of the at least one shoulder strap element 119.

The housing element 124 can comprise, in one embodiment, a strip element 126 having two portions fixed to the main part 102, in particular to respective portions of the front zone 110, in which a space defined between the front zone 110 and the portion of strip element 126 bounded by the two portions of strip element 126 fixed to the main part 102 makes a housing for at least one portion of the foldable part 125 of the at least one shoulder strap element 119.

For example, the two portions of the strip element 126 fixed to the main part 102 can be two ends thereof.

In one embodiment, the strip element 126 can be part of an adjusting belt 113.

The strip element 126 can be fixed to the main part 102 by one or more stitches or other suitable connecting means.

In another embodiment, which is not illustrated in the Figures, the housing element 124 can comprise a pocket made on the main part 102, in particular on the front zone 110, in cui a space defined between a face of the pocket and the front zone 110, makes a housing for at least one portion of the foldable part 125 of the at least one shoulder strap element 119.

The at least one shoulder strap element 119 can have a prevalent longitudinal extent and can comprise a padded first portion 127 arranged for coming to rest on at least one shoulder of a user and being connected to the upper zone 121 of the main part 102 and a second portion 128 connected to the first portion 127 in particular at respective ends.

The body 101 can further comprise coupling means 130 arranged for coupling an intermediate zone 129 of the at least one shoulder strap element 119 interposed between the first end portion 120 and the second end portion 122 with the main part 102, in particular with the front zone 110.

The coupling means 130 can comprise at least one snap or pressure quick attachment/-release element, such as a snap buckle or a snap or pressure button.

The coupling means 130 can comprise at least one first coupling element 130a fitted to the main part 102, in particular on the front zone 110, and at least one respective second coupling element 130b fitted to the intermediate zone 129, in particular to a face facing in use the attachment unit 100 and not outwards, i.e. facing the front zone 110.

The at least one first coupling element 130a and the at least one respective second coupling element 130b are couplable removably to fix the intermediate zone 129 of the at least one shoulder strap element 119 to the main part 102.

The foldable part 125 can be obtained in a portion of the first portion 127, in a portion of the second portion 128 or can comprise a portion of both the first portion 127 and the second portion 128.

The coupling between the at least one first coupling element 130a and the at least one respective second coupling element 130b is particularly useful when it is desired to place the foldable part 125 back in the housing portion 124, i.e. when the at least one shoulder strap element 119 is in the non-operational or folded configuration N.

In this manner, an overall dimension of the at least one shoulder strap element 119 is reduced.

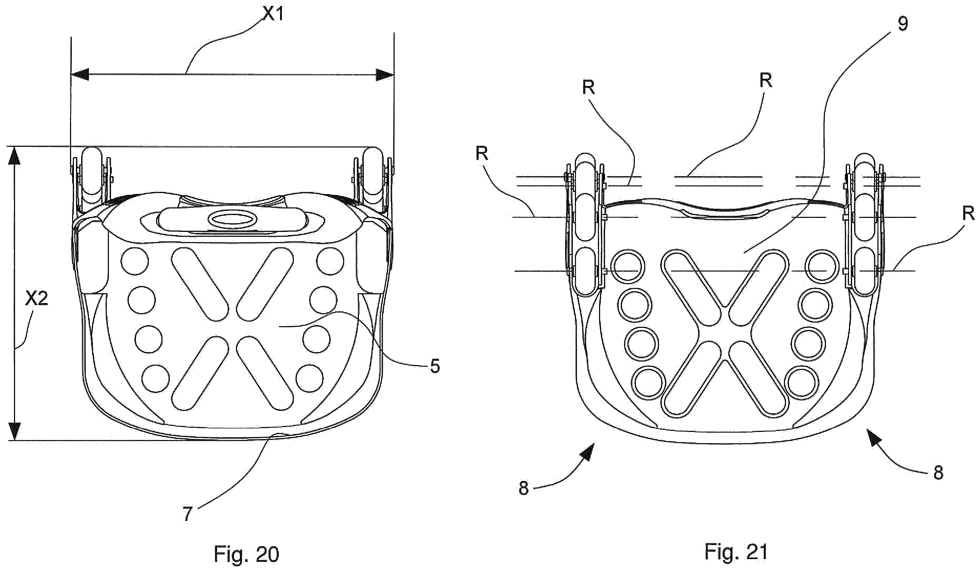

The lower support part 3 of the carrying trolley 1 can further comprise a side wall 6 provided with a lateral containing surface 7 (see for example Figure 20) arranged for containing laterally the piece of luggage 1000.

The side wall 6 projects away from the bottom wall 4.

The side wall 6 extends, in particular, on a perimeter of the bottom wall 4. In particular, the side wall 6 can extend over the entire perimeter of the bottom wall 4.

The side wall 6 can be made as a single body with the bottom wall 4. In an embodiment that is not illustrated in the drawings, the side wall 6 is connected to the bottom wall 4 by connecting elements of known type, comprising, for example, nuts and bolts.

In the embodiment of a carrying trolley 1 shown in the Figures the bottom wall 4 has a substantially rectangular plan shape with chamfered corners. Nevertheless, the bottom wall 4 can have any other plan shape that is suitable for supporting the piece of luggage 1000 effectively.

The lower support part 3 can comprise at least one lower protrusion 8 projecting from a lower face 9 (Figure 21) of the bottom wall 4. The lower face 9 and the bottom face 5 are arranged, in particular, on opposite sides of the bottom wall 4.

The at least one lower protrusion 8 can be provided with an end portion 10 arranged for contacting the sliding surface, for example when the carrying trolley 1 is in a stationary rest position S, so as to act as a support element for the frame 2 and cooperate in stabilizing the carrying trolley 1 in the stationary rest position S.

In other words, the at least one lower protrusion 8 protrudes downwards, i.e. in use towards the sliding surface, and is usable as a support element.

The carrying trolley 1 is arranged in the stationary rest position S when the piece of luggage does not have to be carried, i.e. when the carrying trolley 1 is not moved.

In the embodiment of a carrying trolley 1 illustrated in the Figures, the lower part 3 comprises two lower protrusions 8, but in embodiments that are not illustrated just one lower protrusion 8 or more than two lower protrusions 8 can be present.

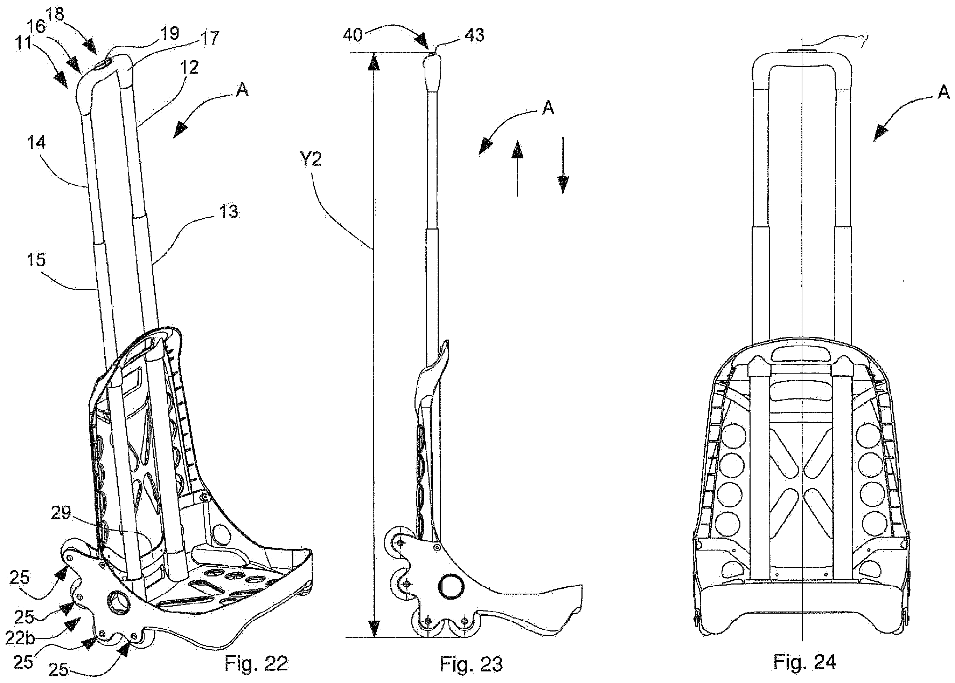

With reference in particular to Figures 22 to 24, the carrying trolley 1 comprises telescopic rod means 11 comprising at least one upper rod 12 and at least one lower rod 13 fixed to the lower support part 3 that define a telescopic upright of the telescopic rod means 11.

At least one part of the telescopic rod means 11 is part of the portion of carrying trolley 1 intended to be encompassed in use, by the attachment unit 100, i.e. when the attachment unit 100 is in the engagement configuration E.

The upper rod 12 and the lower rod 13 are reciprocally connected so that the upper rod 12 is slidable with respect to the lower rod 13 in order that the telescopic rod means 11 can alternatively adopt an extended end-of-stroke configuration A, shown in particular in Figures 1 to 5, and a retracted end-of-stroke configuration B, shown in particular in Figures 8 to 10.

In the extended end-of-stroke configuration A the telescopic rod means 11 has a maximum length whereas in the retracted end-of-stroke configuration B the telescopic rod means 11 has a minimum length.

In use, the telescopic rod means 11 can adopt an intermediate position between the extended end-of-stroke configuration A and the retracted end-of-stroke configuration B on the basis, for example, of a height of a user.

In the embodiment of a carrying trolley 1 shown in the Figures, the telescopic rod means 11 comprises a further upper rod 14 and a further lower rod 15 fixed to the lower support part 3 that define a further telescopic upright of the telescopic rod means 11.

The upper rod 12 and the lower rod 13 extend prevalently along a longitudinal axis L1 substantially parallel to a longitudinal axis L2 of prevalent extent of the further upper rod 14 and of the further lower rod 15. The longitudinal axis L1 of the upper rod 12 and of the lower rod 13 is substantially parallel to a vertical direction V, substantially parallel to the vector associated with the force of gravity and in the opposite way, when the carrying trolley 1 is in the stationary rest position S.

The upper rod 12 and the further upper rod 14 are connected above in a joining portion 16.

The carrying trolley 1 further comprises a gripping handle 17 obtained in the telescopic rod means 11 and intended to be gripped by the user to drag the carrying trolley 1 along the sliding surface.

The gripping handle 17 is defined, in particular, by the joining portion 16 or by part thereof.

In one embodiment that is not illustrated, the telescopic rod means 11 comprises a single telescopic rod.

The upper rod 12 and/or the lower rod 13 and/or the further upper rod 14 and/or the further lower rod 15 can each be tubular shaped, i.e. can be provided with an internal longitudinal cavity.

For example, the upper rod 12 can in use slide into the lower rod 13 (and the further upper rod 14 can in use slide into the further lower rod 15, if present) so that the telescopic rod means 11 can alternatively adopt the extended end-of-stroke configuration A and the retracted end-of-stroke configuration B.

The upper rod 12 and/or the lower rod 13 and/or the further upper rod 14 and/or the further lower rod 15 can each be made of a metal like for example steel.

The telescopic rod means 11 can further comprise locking means 18 arranged for locking a reciprocal movement of the upper rod 12 and of the lower rod 13 (and a reciprocal movement of the further upper rod 14 and of the further lower rod 15, if present) so that the telescopic rod means 11 is locked in the extended end-of-stroke configuration A, in the retracted end-of-stroke configuration B or in one or more intermediate extended configurations so as to position the gripping handle 17 at a height that is ergonomic and convenient for the user for dragging the carrying trolley 1.

The locking means 18 can comprise a button 19 arranged in the joining portion 16 arranged for enabling the reciprocal movement of the upper rod 12 and of the lower rod 13 (and a reciprocal movement of the further upper rod 14 and of the further lower rod 15, if present).

For example, the locking means 18 can further comprise at least one stop pin for each upper rod present, connected to the button 19 and arranged for being retracted when, in use, the button 19 is pressed by the user. Each stop pin is suitable for being slidly inserted into in a respective hole obtained in each upper rod present.

Also, for example, at least one first hole and a second hole are obtained in each of the lower rods present. The first hole is intended, in particular, to be positioned aligned on the hole of each of the upper rods present when the telescopic rod means 11 is in the extended end-of-stroke configuration A, whereas the second hole is intended, in particular, to be positioned aligned on the hole of each of the upper rods present when the telescopic rod means 11 is in the retracted end-of-stroke configuration B. In particular, the stop pin is inserted alternatively into the first hole and into the second hole so as to lock the telescopic rod means 11 in the extended end-of-stroke configuration A or in the retracted end-of-stroke configuration B. In other words, the stop pin, by interaction with the holes disclosed above, constrains together the upper rods with the lower rods present. When the user actuates, in particular presses, the button 19, each stop pin present retracts inside the respective hole and the telescopic rod means 11 can be moved.

The locking means 18 is of known type and will not be disclosed in greater detail below.

The carrying trolley 1 can further comprise a pair of skate devices 20a, 20b mounted to the frame 2 on opposite sides of the lower support part 3 to facilitate in use the sliding of the carrying trolley along the carrying surface T.

In particular, the pair of skate devices 20a, 20b comprises a first skate device 20a and a second skate device 20b that are connected, in particular, to opposite sides of the bottom wall 4.

In particular, the first skate device 20a and the second skate device 20b can be arranged specularly with respect to a longitudinal plane γ that is substantially perpendicular to the bottom face 5, for example a plane of symmetry of the carrying trolley 1.

Each skate device 20a, 20b comprises a plurality of rolling elements 21a, 21b, 21c, 21d each rolling element 21a, 21b, 21c, 21d being rotatable around a respective axis of rotation R. The axes of rotation R of the plurality of rolling elements 21a, 21b, 21c, 21d are substantially parallel to one another.

The rolling elements 21a, 21b, 21c, 21d of each skate device 20a, 20b are at least four in number.

The axes of rotation R of the rolling elements 21a, 21b, 21c, 21d are arranged, in particular, at a growing difference both along the vertical direction V substantially parallel to and with a direction opposite the vector associated with the force of gravity, and along the sliding direction D substantially perpendicular to the vertical direction V.

The rolling elements 21a, 21b, 21c, 21d of each skate device 20a, 20b form at least one first pair (for example the pair of rolling elements 21a, 21b) and a second pair (for example the pair of rolling elements 21c, 21d) of consecutive and distinct rolling elements for each skate device 20a, 20b. The term "distinct" means that the first pair and the second pair of rolling elements 21a, 21b, 21c, 21d do not share any rolling element 21a, 21b, 21c, 21d. The term "consecutive" means that the pairs are formed considering pairs of immediately successive rolling elements also on different sliding planes.

The first pair and the second pair of rolling elements can act along different sliding directions.

The axes of rotation of the first pair of rolling elements lie on a first plane and the axes of rotation of the second pair of rolling elements lie on a second plane. The first plane and the second plane intersect in an intersecting line I (or original line) that bounds a first half plane β on which the axes of rotation of the first pair of rolling elements lie and a second half plane δ on which the axes of rotation of the second pair of rolling elements lie, in which the first half plane β and the second half plane δ together form an angle α that is greater than or the same as 90°.

The angle α is comprised, in particular, between 90° and 110°. Such an angle α ensures that the carrying trolley 1 is more easily transportable when the carrying trolley 1 is dragged on sliding surfaces having a different tilt, for example uneven terrain or stairs, in particular when the tilt increases with respect to a horizontal sliding plane O (for example when ascending a step from the floor or from a horizontal plane), because one of the two pairs of rolling elements, for example the second pair of rolling elements is already facing the sliding surface at a tilt that is different from the horizontal and thus first comes to interact with such a sliding surface. The horizontal travel plane O is a plane that is substantially perpendicular to the vector associated with the force of gravity, and thus substantially perpendicular to the vertical direction V. For example, when a step has to be ascended, one or both of the rolling elements of the second pair of rolling elements already abut against the riser of the step and it is the rolling element/s that will be involved in the ascent to the tread of the step.

Advantageously, for questions of symmetry of the load, the number of rolling elements 21a, 21b, 21c, 21d of the first skate device 20a can correspond, i.e. be equal to, the number of rolling elements 21a, 21b, 21c, 21d of the second skate device 20b, as in the embodiment of a carrying trolley 1 illustrated in the Figures.

In one embodiment of a carrying trolley 1 that is not illustrated in the Figures, however, the number of rolling elements 21a, 21b, 21c, 21d of the first skate device 20a can be different from the number of rolling elements 21a, 21b, 21c, 21d of the second skate device 20b.

Each rolling element 21a, 21b, 21c, 21d of the first skate device 20a can be coaxial with a respective rolling element 21a, 21b, 21c, 21d of the second skate device 20b.

In the embodiment shown in the Figures, each skate device 20a, 20b comprises four rolling elements 21a, 21b, 21c, 21d, i.e. a first rolling element 21a, a second rolling element 21b, a third rolling element 21c and a fourth rolling element 21d arranged in succession, i.e. one after the other in this order. In particular, the first pair of rolling elements can be constituted by the first rolling element 21a and by the second rolling element 21b, whereas the second pair of rolling elements can be constituted by the third rolling element 21c and by the second rolling element 21d.

In the embodiment shown in the Figures, the angle α is about 108°.

In the stationary rest position S the rolling elements of a pair of rolling elements, for example the first pair of rolling elements, act as support elements for the carrying trolley 1 on the sliding surface on which it is placed, for example the horizontal plane O.

Accordingly, the carrying trolley 1 can have as support elements in the stationary rest position S a pair of rolling elements and the end portion 10 of each lower protrusion 8 present.

Considering the stationary rest position S, the axis of rotation R of the rolling element 21a, 21b, 21c, 21d placed at a greater distance from the horizontal plane O with respect to the other rolling elements 21a, 21b, 21c, 21d of each skate device 20a, 20b, is at a distance comprised between 10 cm and 20 cm, in particular between 14 cm and 17 cm.

In the embodiment shown in the Figures, the aforesaid distance of the fourth rolling element 21d with respect to the horizontal plane O is about 15.55 cm.

When in use, i.e. when the carrying trolley 1 is dragged to the sliding surface, the carrying trolley 1 adopts a plurality of operating configurations in which, depending on the type of sliding surface, a sole rolling element of each pair of skate devices 20a, 20b or several rolling elements 21a, 21b, 21c, 21d of each pair of skate devices 20a, 20b can roll on the sliding surface.

A wheelbase between the axes of rotation R of rolling elements of each pair of rolling elements can be comprised between 5.8 cm and 7.1 cm, in particular between 6.0 cm and 6.9 cm.

A wheelbase between the axis of rotation R of two successive rolling elements belonging to two different pairs can be greater than the wheelbases of the rolling elements that belong to the first pair or to the second pair.

In the embodiment of a carrying trolley 1 shown in the Figures, the wheelbase Z1 between the first rolling element 21a and the second rolling element 21b is about 6 cm, the wheelbase Z2 between the second rolling element 21b and the third rolling element 21c is about 7.4 cm and the wheelbase Z3 between the third rolling element 21c and the fourth rolling element 21d is about 6.86 cm.

The bottom face 5 can be substantially flat and can belong to a plane substantially parallel, in particular, to the first half plane β.

The bottom face 5 can be substantially perpendicular to the longitudinal axis L1 of the telescopic rod means 11.

Each skate device 20a, 20b comprises a respective support structure 22a, 22b arranged for supporting the plurality of rolling elements 21a, 21b, 21c, 21d.

The support structures 22a, 22b can be arranged specularly to the longitudinal plane γ.

Each support structure 22a, 22b is fixed stiffly to the frame 2. In particular, each support structure 22a, 22b, unlike prior-art carrying trolleys, does not rotate with respect to the frame 2 during use.

In fact, the carrying trolley 1 is devoid of support elements for supporting the rolling elements that rotate when the carrying trolley 1 meets sliding surfaces at different tilts, in particular when it meets a step or obstacle to be overcome.

Also in particular, each support structure 22a, 22b is fixed stiffly to the lower support part 3 of the frame 2.

Each support structure 22a, 22b comprises a first wing element 23 and a second wing element 24 arranged for supporting on opposite sides the rolling elements 21a, 21b, 21c, 21d of each skate device 20a, 20b. In particular, each rolling element 21a, 21b, 21c, 21d is rotatably supported by a respective support structure 22a, 22b.

The first wing element 23 has a face facing outwards of the carrying trolley 1.

Each first wing element 23 and each second wing element 24 project, in particular, from a portion of side wall 6 placed near the telescopic rod means 11 and projects away from the carrying trolley 1.

Each rolling element 21a, 21b, 21c, 21d comprises, in particular, an idle wheel or an idle roller fitted to the aforesaid support structure 22a, 22b, this idle wheel or roller being freely rotatable around the respective axis of rotation R.

Each rolling element 21a, 21b, 21c, 21d can have a diameter comprised between 5 cm and 6 cm, for example can have a diameter di 5.3 cm.

The axes of rotation R of the plurality of rolling elements 21a, 21b, 21c, 21d intersect a plane perpendicular thereto, like the longitudinal plane γ, in a plurality of points, said points defining the vertices of an irregular polygon. At least two of the inner angles of this irregular polygon are obtuse.

The carrying trolley 1 can comprise rotatable connecting means 25 arranged for connecting each rolling element 21a, 21b, 21c, 21d rotatably to a first wing element 23 and to a second wing element 24. The rotatable connecting means 25 is of known type and can comprise, for example, nuts and bolts.

The frame 2 can further comprise a front part 26, or upright part connected, in particular stiffly, to the lower part 3.

The front part 26 extends prevalently in height, i.e. along a direction substantially parallel to the direction V, and intersects the longitudinal plane γ.

The part 26 is defined as front considering a regular use of the carrying trolley 1 when the carrying trolley 1 is dragged along the sliding direction D, in which the user takes up position near the front part 26 that, in use, is at least in part covered by the attachment unit 100.

In fact, at least one part of the front part 26 is part of the portion of carrying trolley 1 intended to be encompassed in use, by the attachment unit 100, i.e. when the attachment unit 100 is in the engagement configuration E.

The front part 26 defines the element that rises in height of the L shape of the frame 2.

The front part 26 can comprise a first part 27 projecting from a front portion 28 of the side wall 6 and extending transversely to the bottom wall 4. A portion of the telescopic rod means 11, which extends near the first part 27, is mounted interposed between the front portion 28 and a rear portion 29 of the side wall 6, opposite the front portion 28, the portion 28 and the portion 29 being defined respectively front and rear with respect to the sliding direction D. In other words, the front portion 28 is nearer the user in the regular use of the carrying trolley 1 with respect to the rear portion 29.

In particular, it is the first part 27 of the front part 26, or part thereof that is intended to be encompassed in use by the attachment unit 100.

Each passage opening 36 can be obtained, in particular, in the front portion 28.

The front part 26 can further comprise a second part 30 connected to the first part 27. For example, the first part 27 and the second part 30 are made as a single body. Alternatively, the first part 27 and the second part 30 can be joined by connecting elements of known type, for example comprising nuts and bolts.

An upper end portion 40 of the second part 30 can protrude inside the carrying trolley 1, i.e. the bottom wall 4.

A height of the front part 26, taken along the vertical direction V when the carrying trolley is in the stationary rest position S, is such as to be able to contain in height the piece of luggage. For example, a height of an upper end 43 of the second part 30, measured with respect to the bottom face 5, can be comprised between 30 cm and 70 cm, in particular between 40 cm and 60 cm. In the embodiment illustrated in the Figures, this height is about 45 cm.

The carrying trolley 1 has a width X1, measured in a direction substantially perpendicular to the longitudinal plane γ, which can be comprised between 30 cm and 40 cm. In the embodiment illustrated in the Figures, this width X1 is about 35 cm.

The carrying trolley 1 has a further width X2, measured in a direction substantially parallel to the longitudinal plane γ, that can be comprised between 25 cm and 40 cm. In the embodiment illustrated in the Figures, this width X2 is about 32.5 cm.

The carrying trolley 1 has a height, measured in a direction substantially perpendicular to the horizontal plane O, which is variable according to the position in which the telescopic rod means 11 is located. In fact, when the telescopic rod means 11 is in the extended end-of-stroke configuration A, the carrying trolley 1 has a minimum height Y1 that can be comprised between 90 cm and 100 cm. In the embodiment illustrated in the Figures, this minimum height Y1 is about 95 cm. When, on the other hand, the telescopic rod means 11 is in the retracted end-of-stroke configuration B, the carrying trolley 1 has a maximum height Y2 that can be comprised between 40 cm and 60 cm. In the embodiment illustrated in the Figures, this maximum height Y2 is about 49 cm.

In the second part 30 a first opening 31 can be obtained that is arranged for acting as a further gripping handle intended to be gripped by the user to drag the carrying trolley 1 along the sliding surface.

In particular, the first opening 31 is obtained in the second part 30 at a height that is such that, when the telescopic rod means 11 it is in the retracted end-of-stroke configuration B, it is near the gripping handle 17 so that the user can grasp the first opening 31 and the gripping handle 17 simultaneously.

The first wing element 23 and the second wing element 24 project in particular from the front portion 28 of the side wall 6 away from a front face 32 of the front portion 28.

The first wing element 23 and the second wing element 24 are mounted, with respect to the longitudinal plane γ, on opposite sides of the side wall 6 outside the telescopic rod means 11.

A portion of the second wing element 24 can define a portion of side wall 6.

Each support structure 22a, 22b is connected to the side wall 6 and/or to the front part 26. For example, each support structure 22a, 22b is made as a single body with the side wall 6 and/or with the front part 26. Alternatively, each support structure 22a, 22b can be joined to the side wall 6 and/or to the front part 26 by connecting elements of known type, for example comprising nuts and bolts.

In the second part 30 a second opening 33 can be further obtained configured to permit the transit of fixing elements for fixing the piece of luggage 1000 (for example straps). The second opening 33 is interposed between the first opening 31 and the bottom face 5 with respect to the vertical direction V.

In the second part 30, at least one third opening 34 can be further obtained that is configured to enable a portion of each lower rod 13, 15 present to transit. In fact, in the second part 30 the telescopic rod means 11 traverses the front part 26.

A plurality of lightening openings 35 can be obtained in the frame 2 arranged for lightening a mass of the carrying trolley 1.

One or more of these lightening openings 35 is/are obtained in the bottom wall 4 and/or in the front part 26 and/or in the side wall 6 and/or in the first wing element 23.

One or more of these lightening openings 35 can have a circular and/or oval and/or oblong shape.

One or more of the lightening openings 35 can have an X plan shape.

A plurality of the lightening openings 35 can be arranged for forming an X, for example in the bottom wall 4 and/or in the second part 30.

The attachment unit 100, the carrying trolley 1 and the piece of luggage 100, when the carrying trolley 1 and the piece of luggage 100 are attached to the attachment unit 100 (coupled configuration E), create a carrying system 10000, shown in particular in Figures 10 to 15.

An example of the use and assembly of the attachment unit 100 will be exposed below.

In use, i.e. when the piece of luggage 1000 has to be carried by the carrying trolley 1, above all the attachment unit 100 is connected to the carrying trolley 1 so that the main part 102 encompasses a portion of the carrying trolley 1, in particular a portion of the telescopic rod means 11 and a portion of the front part 26, in particular a portion of the first part 27.

The attachment unit 100 and the carrying trolley 1 can be connected for example by inserting the attachment unit 100 into the portion of the carrying trolley 1, i.e. by passing the telescopic rod means 11 and a portion of the front part 26 through the through opening 104. Alternatively, for example when the main part 102 is made of several pieces, these pieces are applied near the frame 2 so as to encompass externally a portion of the telescopic rod means 11 and a portion of the front part 26. After which they are connected, for example by using a zip closure or another connecting means of known type.

Once the carrying trolley 1 is attached to the attachment unit 100, the piece of luggage 1000 is placed on the carrying trolley 1 so that the base 1001 rests on the bottom face 5 and the backrest 1004 is near the telescopic rod means 11. In this position, the attachment means 103 of the attachment unit 100 and the connecting means 1002 of the piece of luggage 1000 are connected.

In the embodiment illustrated in the Figures, for example, each male connecting element 1003 of the piece of luggage 1000 is taken as far as the respective receiving seat 137 provided in each female first attachment element 107a and in each female second attachment element 107b. In particular, a pin element of each male connecting element 1003, shaped for example as a pin or a mushroom, is arranged with one longitudinal axis thereof substantially coinciding with a longitudinal axis of the respective receiving seat 137 and inserted into the respective receiving seat 137 by moving and applying a longitudinal force directed along a direction substantially coinciding with the longitudinal axis of the respective receiving seat 137. This force must be such as to overcome the elastic force applied by the abutting elements 139 and directed to the centre of the receiving seat 137. The displacement portion is such as to enable the abutting elements 139 to encompass and retain a restricted portion of the male connecting element 1003 inserted into the respective receiving seat 137. At this point, the male connecting element 1003 inserted into the respective receiving seat 137 and the corresponding female attachment element are reciprocally coupled.

The attachment unit 100 is thus now in the coupled configuration E in which the attachment unit 100 is attached both to the piece of luggage 1000 and to the carrying trolley 1.

In the coupled configuration E, the attachment unit 100, the carrying trolley 1 and the piece of luggage 1000 define the carrying system 10000.

In this coupled configuration E, the piece of luggage 1000 can be carried by the carrying trolley 1 securely owing to the reciprocal coupling with the attachment unit 100.

It should be noticed that owing to the attachment unit 100, the shoulder straps 1005 of the piece of luggage 1000 remain arranged between the backrest 1004 and the telescopic rod means 11, and are thus not used during movement of the piece of luggage 1000 by the carrying trolley 1. As a result, the shoulder straps 1005 need not have a particular shape, for example a reduced width, to be able to be passed into the second opening 33, but can have a traditional ergonomic shape.

If the carrying system 10000 has to be carried on the shoulders, the user uses the shoulder strap elements 119 present, which are shaped so as to be ergonomic and convenient for the user. In this manner, carrying the carrying system 10000 on the shoulders is easy and ergonomic.

It should also be noticed that, owing to the attachment unit 100, the backrest 1004 is not modified with respect to the classical backrests of the luggage 1000 of known type, in particular no element, like a pocket, has to be obtained there that should be arranged for coupling with the carrying trolley 1. In this manner, carrying only the piece of luggage 1000 on the shoulders of a user is easy and ergonomic. Further, the structure of the piece of luggage 1000 can be simplified, for example, the shoulder straps 1005 may not be present.

Each shoulder strap element 119 present can be passed through the second opening 33 provided in the carrying trolley 1 and the at least one connecting element 123 can be coupled, in particular by snap coupling, with the respective connecting member 37.

For example, a carabiner fitted to the second end portion 122 of the at least one shoulder strap element 119 is attached to a slat provided in the frame 2 of the carrying trolley 1. In this manner, the shoulder strap element 119 can be used to carry the carrying system 10000 or the attachment unit 100 and the carrying trolley 1 on the shoulders when they are reciprocally coupled.

The intermediate zone 129 of the at least one shoulder strap element 119 can then be fixed to the main part 102 by the coupling means 130, for example by snap coupling the first coupling element 130a to the second coupling element 130b.

The foldable part 125 of the at least one shoulder strap element 119 can be arranged in the housing element 124, for example by folding manually this foldable part 125 and positioning this foldable part 125 between the front zone 110 and the strip element 126.

The at least one shoulder strap element 119 is in the non-operational or folded configuration N.

In order to use the at least one shoulder strap element 119, it will suffice to remove the shoulder strap element 119 from the housing element 124 and possibly disengage the intermediate zone 129 from the main part 102.

Below, an embodiment of using the carrying system 10000 will be shown, in particular when the sliding surface comprises ascending the steps of a flight of stairs.

When a user has to carry the piece of luggage 1000 by the carrying trolley 1, once the attachment unit 100 has been connected to both the piece of luggage 1000 and to the carrying trolley 1, the user presses the button 19 to release the movement of the upper rod 12 and of the further upper rod 14, if present, and enable the telescopic rod means 11 to be taken to the extended end-of-stroke configuration A, if they have not already been taken there. Simultaneously or subsequently, the user tilts the carrying trolley 1 by grasping, for example, the gripping handle 17 and drags the carrying trolley 1 along the sliding direction D, for example along the horizontal plane O. The carrying trolley 1 is in a position in which the longitudinal axis L1 of the upper rod 12 and the longitudinal axis L2 of the further upper rod 14, if present, is substantially transverse to the vertical direction V. Some of the rolling elements 21a, 21b, 21c, 21d of the skate devices 20a, 20b start to roll on the sliding surface.

In the embodiment illustrated in the Figures, for example, it is the second rolling elements 21b that in this phase start to roll.

When the carrying trolley 1 reaches a first step of stairs, the user takes the carrying trolley 1 to a position in which the longitudinal axis L1, L2 of the upper rod 12 and of the further upper rod 14, if present, is again substantially parallel to the vertical direction V. One of the rolling elements 21a, 21b, 21c, 21d of each skate device 20a, 20b, i.e. the one having an upper end at a height greater than to the others, already abuts against the riser of the first step. The user can drag the carrying trolley 1 facilitated by the rolling of these rolling elements 21a, 21b, 21c, 21d on the riser of the first step and, subsequently, on the corner of the first step.

In the embodiment illustrated in the Figures, for example the fourth rolling elements 21d in a first ascent phase start to roll and help the carrying trolley 1 ascend onto the first step.

Whilst the carrying trolley 1 continues to move on the stairs, the ascent is assisted also by other rolling elements 21a, 21b, 21c, 21d.

In the embodiment illustrated in the Figures, for example, the third rolling elements 21c, together with the fourth rolling elements 21d, in a second phase, assist the carrying trolley 1 to ascend the first step. Subsequently, in a third phase, the second rolling elements 21b, together with the third rolling elements 21c, assist the carrying trolley 1 to ascend the first step. Lastly, the carrying trolley 1 reaches the tread of the first step and the first rolling elements 21a, together with the second rolling elements 21b, rotate on the tread of the first step so that the carrying trolley 1 is returned to a position in which the longitudinal axis L1, L2 of the upper rod 12 and of the further upper rod 14, if present, is again substantially parallel to the vertical direction V.

The operating positions are repeated substantially over the entire ascent of the stairs.

When the sliding surface is arranged on uneven terrain, generally at least two rolling elements 21a, 21b, 21c, 21d of each skate device 20a, 20b (i.e. at least four rolling elements 21a, 21b, 21c, 21d) roll to the sliding surface, enabling the carrying trolley 1 to be dragged by the user more easily than with prior-art carrying trolleys in which, when the uprights are tilted with respect to a horizontal plane, only one rolling element per side rolls on the sliding surface.

The carrying trolley 1 of a piece of luggage 1000, in particular of a backpack, as disclosed previously has numerous advantages.

Firstly, the presence of a greater number of successive rolling elements compared to the prior-art carrying trolleys enables, for the same diameter of the rolling elements, the rolling surface to be increased, and dragging of the carrying trolley 1 by a user to therefore be made easier. Also the rolling surface is increased owing to the arrangement of the sequence of rolling elements 21a, 21b, 21c, 21d in each skate device 20a, 20b which enables several opposite pairs of rolling elements 21a, 21b, 21c, 21d to roll simultaneously on the sliding surface. Owing to the greater number of rolling elements 21a, 21b, 21c, 21d and the particular arrangement thereof, it is possible to discharge the vertical component of the weight force of the carrying trolley 1 by the rolling elements 21a, 21b, 21c, 21d that rest totally or partially on the sliding surface for a greater portion than do prior-art carrying trolleys.

Secondly, the particular arrangement of the rolling elements 21a, 21b, 21c, 21d in which the angle α between the first half plane β and the second half plane δ, as defined above, on which respectively the axes of rotation R of the first pair of rolling elements and of the second pair of rolling elements lies that is greater than or the same as 90°, in particular comprised between 90° and 110°, facilitates, during dragging of the carrying trolley 1, the movements along stairs (also along winding or along spiral staircases that have small treads), uneven steps or terrain, because at least one of the elements 21a, 21b, 21c, 21d of each skate device 20a, 20b rests on a riser of a step when the carrying trolley 1 reaches the step, without need for rotation of the support structures 22a, 22b of the rolling elements 21a, 21b, 21c, 21d.

In fact, the carrying trolley 1 has support structures 22a, 22b of the rolling elements 21a, 21b, 21c, 21d fixed stiffly to the frame 2 and is devoid of tilting elements that can get damaged during movement along stairs, for example by knocking against corners of steps. The carrying trolley 1 therefore has a more simplified structure than the prior-art carrying trolleys that comprise triangular support structures with spokes that rotate in use around an axis of rotation.

The particular arrangement of the rolling elements 21a, 21b, 21c, 21d further enables a compact carrying trolley for carrying a piece of luggage to be obtained.

Dragging the carrying trolley 1 is thus very easy and without excessive force for the user even along sliding planes with different angles/tilts.

In order to separate the piece of luggage 1000 from the carrying system 10000, it is sufficient to disengage manually the attachment means 103 from the connecting means 1002, for example by pressing on opposite sides the elastic attachment/release button/s 138 which enables the male connecting elements 1007 to be released from the corresponding female attachment elements 107a, 107b receiving, in particular, from the respective receiving seats 138.

The attachment unit 100 and the carrying system 10000 in which this attachment unit 100 can be used has numerous advantages.

In fact, as the attachment unit 100 is distinct from the piece of luggage 1000 and from the carrying trolley 1, i.e. it is an element separated from the carrying trolley 1, the piece of luggage 1000 and the carrying trolley 1 can have any shape. In particular, the backrest 1004 and the shoulder straps 1005 need not have to have any particular or dedicated shape for attaching to the attachment unit 100. The piece of luggage 1000 has to be only provided with the connecting means 1002 for the coupling with the attachment means 103 of the attachment unit 100 in order to ensure safe carrying of the piece of luggage 1000 when the carrying system 10000 is moved to prevent the possibility of the piece of luggage 1000 falling outside the bottom wall 4 or tilting with respect to the bottom wall 4.

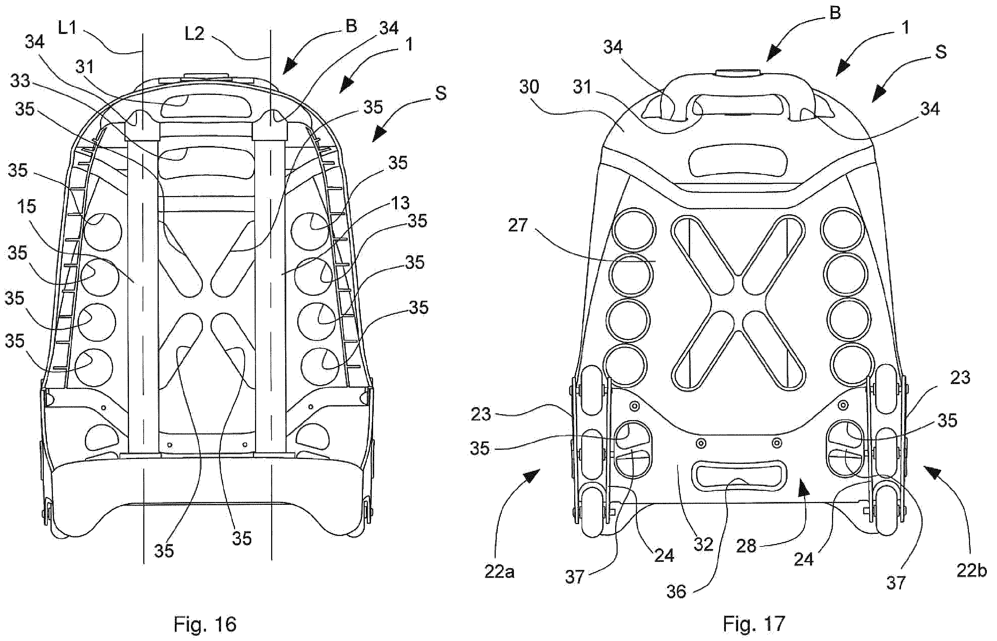

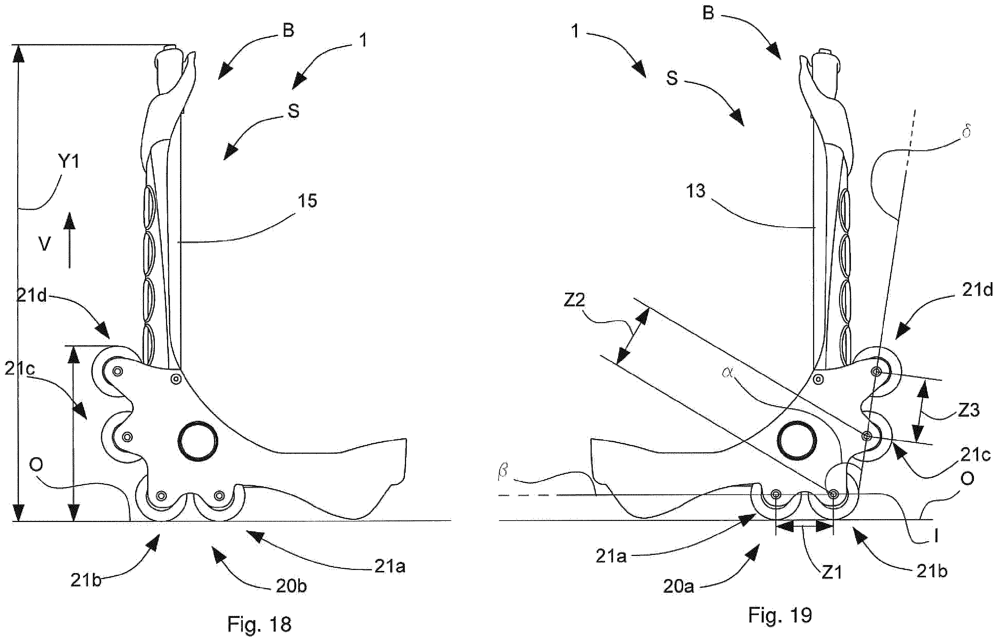

Further, the carrying trolley 1 can have a configuration like that illustrated in particular in Figures 2 and from 16 to 24, but can have a different configuration, for example a number and arrangement of rolling elements, or wheels that are different from the embodiment of Figures 2 and 16 to 24. For example, the carrying trolley 1 can be a carrying trolley of known type having a pair of opposite wheels (so-called two-wheel carrying trolleys), or a pair of opposite three-wheel units the axes of rotation of which are arranged at the vertices of a triangle (so-called three-wheel or "star" carrying trolleys). This is because the attachment unit 100 does not have a dedicated shape for the carrying trolley 1, because to couple the attachment unit 100 to the carrying trolley 1 it is sufficient for the main part 102 of the attachment unit 100 to encompass a portion of a carrying trolley, for example by wearing the attachment unit 100 on this portion of carrying trolley.

## Claims

1. Attachment unit (100) configured to connect a piece of luggage (1000) to a carrying trolley (1) arranged for carrying said piece of luggage (1000), said attachment unit (100) comprising a body (101) provided with:
- a main part (102) configured to encompass a portion (26, 11) of said carrying trolley (1) so as to reversibly connect said attachment unit (100) to said carrying trolley (1); and
- attachment means (103) fitted to said main part (102) and configured to engage connecting means (1002) of said piece of luggage (1000) so as to reversibly connect said attachment unit (100) to said luggage (1000);
wherein when said main part (102) encompasses said portion (11, 26) of said carrying trolley (1) and said attachment means (103) engages said connecting means (1002) of said piece of luggage (1000), said attachment unit (100) is in a coupled configuration (E) in which said attachment unit (100) is attached both to said piece of luggage (1000) and to said carrying trolley (1) so that said piece of luggage (1000) can be carried by said carrying trolley (1).

2. Attachment unit (100) according to claim 1, wherein said main part (102) has a circular or oval plan shape and is provided with a through opening (104) configured to be traversed by said portion (11, 26) so that said main part (102) encompasses said portion (11, 26) and said attachment unit (100) is connected to said carrying trolley (1).

3. Attachment unit (100) according to claim 2, wherein said main part (102) is in a single piece or comprises at least one first piece (105) and at least one second piece (106) that are reciprocally connectable, or connected in a permanent or fixed manner, to form said through opening (104).

4. Attachment unit (100) according to claim 3, wherein said attachment means (103) comprises a plurality of attachment elements (107) connected to said main part (102), at least one first female attachment element (107a) or at least one first male attachment element of said plurality of attachment elements (107) being arranged near a first side edge (108) of said main part (102) and at least one second female attachment element (107b) or at least one second male attachment element being arranged near a second side edge (109) of said main part (102) opposite said first side edge (108), said at least one first female attachment element (107a) or said at least one first male attachment element and said at least one second female attachment element (107b) or said at least one second male attachment element being arranged for each coupling, in a releasable manner with a respective complementary male connecting element (1003) or female connecting element of said connecting means (1002) fitted to said piece of luggage (1000) to connect said attachment unit (100) to said piece of luggage (1000) releasably.

5. Attachment unit (100) according to claim 4, wherein said main part (102) comprises a front zone (110) facing outwards in said coupled configuration (E) and a rear zone (111) opposite said front zone (110) and facing said piece of luggage (1000) in said coupled configuration (E), said plurality of attachment elements (107) being connected to said front zone (110) and protruding to said rear zone (111) to couple with said connecting means (1002) of said piece of luggage (1000).

6. Attachment unit (100) according to claim 4 or 5, wherein said main part (102) further comprises distance adjusting means (112) slidingly associated with said attachment means (103) to adjust a distance of said attachment means (103) from said main part (102), said distance adjusting means (112) comprising a plurality of distance adjusting belts (113), each distance adjusting belt (113) being provided with:
- a belt portion (114) fitted in a permanent or fixed manner to said main part (102),
- a further belt portion (115) intended to engage slidingly and releasably a respective attachment element (107), and
- a releasable connecting device (116) arranged for connecting said belt portion (114) and said further belt portion (115) so as to take said attachment means (103) to a desired distance from said main part (102).

7. Attachment unit (100) according to any one of the preceding claims, and further comprising retaining adjusting means (117) configured to adjust the retaining of said main part (102) on said carrying trolley (1).

8. Attachment unit (100) according to claim 7, as claim 7 is appended to claim 5 or 6, wherein said retaining adjusting means (117) comprises a releasable joining device (118) configured to engage slidingly and releasably a passage opening (36) obtained in a frame (2) of said carrying trolley (1) and interposed, when said main part (102) encompasses said portion (11, 26) of said carrying trolley (1), between said front zone (110) and said rear zone (111) and thus connect said front zone (110) and said rear zone (111) to firmly fix said main part (102) of said attachment unit (100) to said carrying trolley (1).

9. Attachment unit (100) according to claim 8, wherein said releasable connecting device (116) and said releasable joining device (118) comprise, each, either a snap attachment element or a hook-and-loop fastening system or a magnetic closing system.

10. Attachment unit (100) according to any one of the preceding claims, wherein said body (101) further comprises at least one shoulder strap element (119) for carrying on at least one shoulder of a user, said at least one shoulder strap element (119) being provided with a first end portion (120) connectable, or connected permanently or in a fixed manner, to an upper zone (121) of said main part (102) and a second end portion (122) opposite said first end portion (120) connectable, or connected permanently or in a fixed manner, to a lower support part (3) of said carrying trolley (1), said first end portion (120) and/or said second end portion (122) being provided with a connecting element (123) to connect releasably said at least one shoulder strap element (119) to said main part (102) and/or to said carrying trolley (1).

11. Attachment unit (100) according to claim 10, wherein said first end portion (120) is connected permanently or in a fixed manner to said upper zone (121) and said at least one connecting element (123) is provided in said second end portion (122) and is snap-couplable with a respective connecting member (37) provided in said lower support part (3) of said carrying trolley (1) to fix said at least one shoulder strap element (119) onto the carrying trolley (1).

12. Attachment unit (100) according to claim 10 or 11, wherein said main part (102) further comprises a housing element (124) configured to house at least one portion of a foldable part (125) of said at least one shoulder strap element (119) in a non-operating configuration (N) of said at least one shoulder strap element (119) thus reducing overall dimensions of said at least one shoulder strap element (119).

13. Attachment unit (100) according to claim 12, as claim 10 is appended to any one of claims 5 to 9, as claim 7 is appended to claim 5 or 6, wherein said housing element (124) comprises a strip element (126) having two portions fixed to said main part (102), or a pocket made in said main part (102), a space defined between said front zone (110) and the portion of strip element (126) bounded by the two portions of strip element (126) fixed to said main part (102), or a space defined between a face of said pocket and said front zone (110), making a housing for said at least one portion of foldable part (125) of said at least one shoulder strap element (119).

14. Attachment unit (100) according to any one of claims 10 to 13, wherein said at least one shoulder strap element (119) has a prevalent longitudinal extent and comprises a padded first portion (127) arranged for coming to rest on at least one shoulder of a user and connected to said upper zone (121) of said main part (102) and a second portion (128), said body (101) further comprising coupling means (130) arranged for coupling an intermediate zone (129) that is interposed between said first end portion (120) and said second end portion (122) with said main part (102), said coupling means (130) comprising at least one first coupling element (130a) fitted to said main part (102), and at least one respective second coupling element (130b) fitted to said intermediate zone (129), said first coupling element (130a) and said at least one respective second coupling element (130b) being couplable removably.

15. Carrying system (10000) comprising:
- a piece of luggage (1000), in particular a backpack, comprising a base (1001);
- a carrying trolley (1) arranged for carrying said piece of luggage (1000), comprising:
- a frame (2) arranged for supporting said piece of luggage (1000) and provided with a lower support part (3) configured to receive and support said base (1001) of said piece of luggage;
- telescopic rod means (11) comprising at least one upper rod (12) and at least one lower rod (13) fixed to said at least one lower support part (3); said at least one upper rod (12) and said at least one lower rod (13) being reciprocally connected so that said at least one upper rod (12) is slidable with respect to said at least one lower rod (13) so that said telescopic rod means (11) can alternatively adopt an extended end-of-stroke (A) configuration and a retracted end-of-stroke (B) configuration;
- a gripping handle (17) obtained in said telescopic rod means (11) and intended to be gripped by a user to drag said carrying trolley (1) along a sliding surface (T);
- a pair of skate devices (20a, 20b) fitted to said frame (2) on opposite sides of said lower support part (3) to facilitate in use travel of said carrying trolley (1) along said sliding surface (T), each skate device (20a, 20b) comprising a plurality of v elements (21a, 21b, 21c, 21d) each of which is rotatable around a respective axis of rotation (R), the axes of rotation of said plurality of rolling elements (21a, 21b, 21c, 21d) being substantially parallel to one another;
said carrying system (10000) further comprising an attachment unit (100) according to any one of claims 1 to 14.

16. Carrying system (10000) according to claim 15, wherein said carrying trolley (1) comprises a portion (11, 26) configured to be encompassed by said attachment unit (100) so that said attachment unit (100) is connected reversibly to said carrying trolley (1) and said piece of luggage (1000) comprises connecting means (1002) configured to engage, in particular by pressure, said attachment means (103) of said attachment unit (100) so as to reversibly connect said attachment unit (100) to said piece of luggage (1000).

17. Carrying system (10000) according to claim 15 or 16, wherein the rolling elements (21a, 21b, 21c, 21d) of each skate device (20a, 20b) are at least four, forming a first pair (21a, 21b) and a second pair (21c, 21d) of consecutive and distinct rolling elements for each skate device (20a, 20b), the axes of rotation (R) of said first pair of rolling elements (21a, 21b) lying on a first plane and the axes of rotation (R) of said second pair of rolling elements (21c, 21d) lying on a second plane, said first plane and said second plane being intersected in an intersecting line (I) that bounds a first half plane (β) on which the axes of rotation (R) of said first pair of rolling elements (21a, 21b) lie and a second half plane (δ) on which the axes of rotation (R) of said second pair of rolling elements (21c, 21d) lie, in which said first half plane (β) and second half plane (δ) together form an angle (α) that is greater than or the same as 90°.
